# EUROPEAN PATENT APPLICATION

(11) **EP 4 764 254 A1**
(43) Date of publication of application: **24.06.2026**
(21) Application number: 24855450.3
(22) Date of filing: 24.06.2024
(51) Int. Cl.: F16H 48/20, B60W 10/12, F16H 48/34

(54) **DIFFERENTIAL LOCK CONTROL METHOD, VEHICLE DEVICE, AND STORAGE MEDIUM**

(30) Priority: 21.08.2023 CN 202311056612
(71) Applicant: Dongfeng Motor Group Co., Ltd., Wuhan, Hubei 430000 (CN)
(72) Inventor: SHUANG, Jingwen, Wuhan, Hubei 430000 (CN); LI, Song, Wuhan, Hubei 430000 (CN); ZHU, Ling, Wuhan, Hubei 430000 (CN); XU, Xinyi, Wuhan, Hubei 430000 (CN); ZHU, Huixi, Wuhan, Hubei 430000 (CN)
(74) Representative: Lohmanns Lohmanns & Partner mbB
(86) International application number: PCT/CN2024/100858
(87) International publication number: WO 2025/039721

(57) **Abstract**

A differential lock control method, a vehicle device, and a storage medium. The vehicle device comprises an MCU, a VCU, and a differential lock circuit. The differential lock circuit comprises a differential lock. The differential lock control method comprises: determining a communication state between an MCU and a VCU; when the communication state is normal and state information of a differential lock is abnormal, the VCU performing anomaly control processing on the differential lock; and when the communication state is abnormal, the MCU performing anomaly control processing on the differential lock on the basis of an actual state sampling signal.

## Description

The present application claims priority to Chinese Patent Application No. 202311056612.8, filed on August 21, 2023, the entire contents of which are incorporated herein by reference.

### Field of the Invention

The present application relates to the technical field of differential lock control, and in particular to a differential lock control method, a vehicle device, and a storage medium.

### Background of the Invention

With the popularization of automobiles, performance requirements for automobiles are increasingly higher, especially in the field of off-road vehicles, where requirements for vehicle safety performance and passing capability under complex road conditions are continuously increasing. In view of the above, introduction of a differential lock can improve passing capability of a vehicle on slippery ground or in a desert environment, and therefore safety control of the differential lock is particularly important.

At present, vehicle devices mainly control the differential lock through a motor control unit (MCU). However, the control manner of the differential lock described above is relatively single and cannot be applied to scenarios of a plurality of differential lock abnormalities, that is, anomaly processing cannot be effectively performed on the differential lock, thereby reducing safety of the vehicle device.

### Summary of the Invention

### Technical Problem

The embodiments of the present application provide a differential lock control method, a vehicle device, and a storage medium, which can effectively perform anomaly processing on the differential lock, thereby improving the safety of the vehicle device.

### Technical Solution

The technical solutions in the embodiments of the present application are implemented as follows.

In a first aspect, an embodiment of the present application provides a differential lock control method, the control method is applied to a vehicle device, and the vehicle device comprises an MCU, a VCU, and a differential lock circuit, the differential lock circuit comprises a differential lock, and the method comprises:
determining a communication state between the MCU and the VCU;
performing anomaly control processing on the differential lock by the VCU when the communication state is normal and state information of the differential lock is abnormal; and
performing anomaly control processing on the differential lock according to an actual state sampling signal corresponding to the differential lock circuit by the MCU when the communication state is abnormal.

In a second aspect, an embodiment of the present application provides a vehicle device, and the vehicle device comprises: a determination unit and a control unit;
the determination unit is configured to determine a communication state between an MCU and a VCU; and
the control unit is configured to perform anomaly control processing on a differential lock when the communication state is normal and state information of the differential lock is abnormal; and perform anomaly control processing on the differential lock according to an actual state sampling signal when the communication state is abnormal.

In a third aspect, an embodiment of the present application provides a vehicle device, and the vehicle device comprises a processor, an MCU, a VCU, and a differential lock circuit, and the differential lock circuit comprises a differential lock;
the processor is configured to determine a communication state between the MCU and the VCU;
the VCU is configured to perform anomaly control processing on the differential lock when the communication state is normal and state information of the differential lock is abnormal; and
the MCU is configured to perform anomaly control processing on the differential lock according to an actual state sampling signal when the communication state is abnormal.

In a fourth aspect, an embodiment of the present application provides a computer-readable storage medium, with a program stored thereon, and when the program is executed by a processor, the method described in the first aspect above is implemented.

### Beneficial Effects

The embodiments of the present application provide a differential lock control method, a vehicle device, and a storage medium, the vehicle device comprises an MCU, a VCU, and a differential lock circuit, the differential lock circuit comprises a differential lock, and the vehicle device determines a communication state between the MCU and the VCU; when the communication state is normal and state information of the differential lock is abnormal, the VCU performs anomaly control processing on the differential lock; and when the communication state is abnormal, the MCU performs anomaly control processing on the differential lock according to an actual state sampling signal. Thus, in the embodiments of the present application, in scenarios where the differential lock is in an abnormal working state, the VCU can be used to perform anomaly control processing on the differential lock; and in scenarios where communication between the MCU and the VCU is abnormal, the MCU can be used to perform anomaly control processing on the differential lock, thereby overcoming the defect that the control manner of the differential lock is relatively single, adapting to various scenarios of differential lock abnormalities or communication abnormalities, enabling anomaly processing to be effectively performed on the differential lock, and improving the safety of the vehicle device.

### Brief Description of the Drawings

Fig. 1 is a structural diagram I of a vehicle device in the embodiment of the present application;
Fig. 2 is a schematic diagram I of a differential lock circuit;
Fig. 3 is a schematic flowchart I of implementation of a differential lock control method;
Fig. 4 is a schematic diagram II of a differential lock circuit;
Fig. 5 is a schematic diagram of information interaction between the MCU and the VCU;
Fig. 6 is a structural diagram II of a vehicle device in the embodiment of the present application;
Fig. 7 is a schematic diagram of anomaly processing of a differential lock;
Fig. 8 is a schematic flowchart II of implementation of a differential lock control method;
Fig. 9 is a schematic diagram of a safety control circuit of a differential lock;
Fig. 10 is a signal transmission diagram of differential lock control and anomaly processing;
Fig. 11 is a flowchart of a differential lock in a normal locked state;
Fig. 12 is a flowchart of a differential lock in a normal unlocked state;
Fig. 13 is a flowchart I of a differential lock in an abnormal unlocked state;
Fig. 14 is a flowchart II of a differential lock in an abnormal locked state;
Fig. 15 is a flowchart I of a differential lock in a communication anomaly processing state;
Fig. 16 is a flowchart II of a differential lock in a communication anomaly processing state;
Fig. 17 is a structural diagram III of a vehicle device in the embodiment of the present application;
Fig. 18 is a structural diagram IV of a vehicle device in the embodiment of the present application.

### Detailed Description of the Embodiments

The following will describe the technical solutions in the embodiments of the present application clearly and completely with reference to the accompanying drawings in the embodiments of the present application. It should be understood that the specific embodiments described herein are only for explaining the relevant application and are not intended to limit the present application. It should also be noted that, for the sake of convenience in description, only the portions related to the relevant application are shown in the accompanying drawings.

The differential lock is widely used in the automotive field and is one of the important components of a vehicle device. The differential lock refers to a mechanism that, when one drive wheel slips, locks the differential case and the axle shaft together, eliminating the differential action of the differential, and transferring all torque to the other drive wheel on the other side. Under normal circumstances, when communication between the MCU and VCU is functioning properly, the MCU sends a control signal to the differential lock based on the instruction from the VCU, and transmits a working state of the differential lock to the VCU. If the differential lock is in an abnormal working state, the VCU performs anomaly processing on the differential lock. When communication between the MCU and the VCU is abnormal, the MCU performs effective anomaly processing on the differential lock. Through the effective control of the differential lock through combining the MCU and the VCU, adverse consequences caused by control failure can be reduced.

The following will describe the technical solutions in the embodiments of the present application clearly and completely with reference to the accompanying drawings in the embodiments of the present application.

An embodiment of the present application provides a differential lock control method. The differential lock control method can be applied to a vehicle device, wherein the vehicle device comprises an MCU, a VCU, and a differential lock circuit, and the differential lock circuit comprises a differential lock.

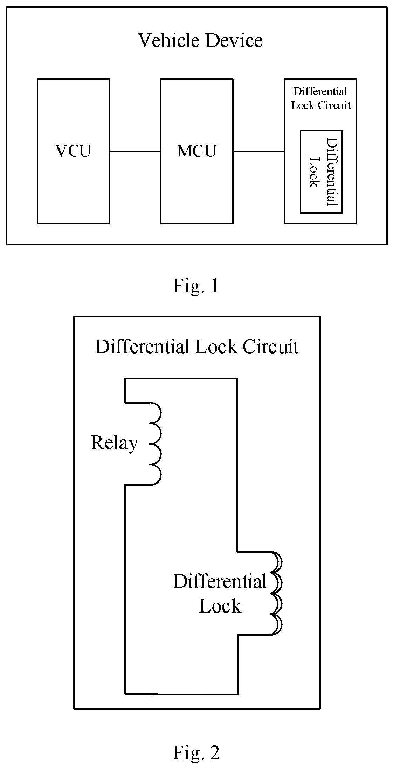

Exemplarily, in some embodiments, Fig. 1 is a structural diagram I of a vehicle device in the embodiments of the present application. As shown in Fig. 1, the vehicle device can be composed of an MCU, a VCU, and a differential lock circuit, wherein the differential lock circuit can comprise a differential lock.

It should be noted that, in the embodiments of the present application, the VCU is a vehicular communication unit and is a core control component of the entire vehicle. The VCU collects an accelerator pedal signal, a brake pedal signal, and signals of other components, makes corresponding determinations, and then controls actions of controllers of lower-level components, thereby driving the vehicle to run normally. The MCU is a motor control unit, which is a chip composed of a microprocessor, a power supply circuit, and a control circuit, and is mainly used to control various types of motors. The differential lock circuit is composed of a differential lock and a relay, and locking and unlocking states of the differential lock can be controlled through controlling on/off of the relay. The differential lock refers to a mechanism that, when one drive wheel slips, locks the differential case and the axle shaft together, eliminating the differential action of the differential and transferring all torque to the other drive wheel on the other side.

Exemplarily, in the embodiments of the present application, Fig. 2 is a schematic diagram I of a differential lock circuit. As shown in Fig. 2, the differential lock circuit comprises a relay and a differential lock. The differential lock circuit can control locking and unlocking of the differential lock through controlling on/off of the relay. When the relay is energized and engages, the differential lock works in a locked state; and when the relay is de-energized and disengages, the differential lock works in an unlocked state.

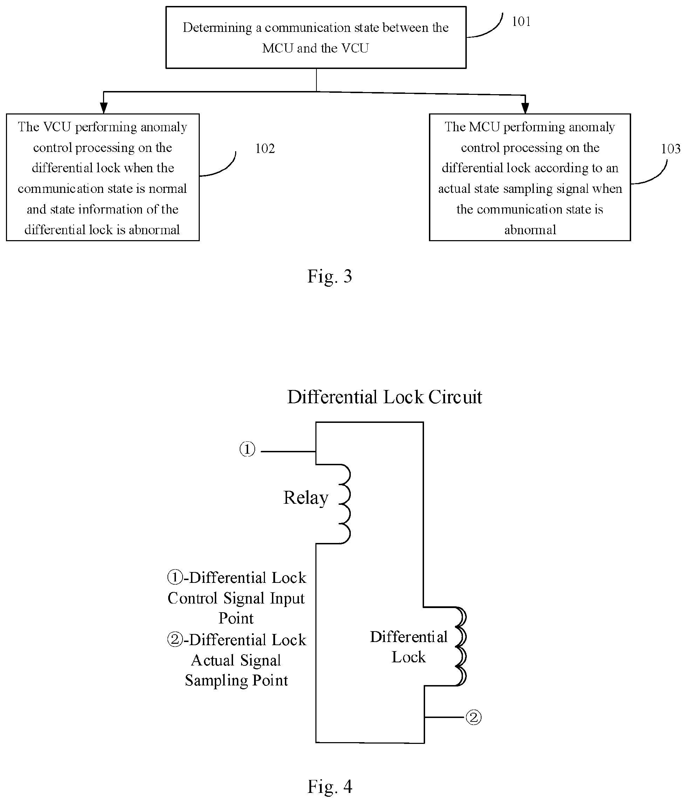

In the embodiments of the present application, Fig. 3 is a schematic flowchart I of implementation of a differential lock control method. The method for controlling the differential lock in the vehicle device can comprise the following steps:
S101: A communication state between the MCU and the VCU is determined.

In the embodiments of the present application, the vehicle device can first determine the communication state between the MCU and the VCU.

It should be noted that, in the embodiments of the present application, through determining the communication state between the MCU and the VCU, the vehicle device can detect whether communication between the MCU and the VCU is abnormal.

In the embodiments of the present application, when determining the communication state between the MCU and the VCU, the vehicle device can judge the communication state through intercepting signals between the MCU and the VCU. If there is an interruption, an error, or a failure in verification information in the signals between the MCU and the VCU, the communication between the MCU and the VCU can be considered abnormal, and the communication state between the MCU and the VCU can be determined as a communication abnormal state.

Correspondingly, in the embodiments of the present application, when signals between the MCU and the VCU can be fed back in time, communication between the MCU and the VCU can be considered normal, and the communication state between the MCU and the VCU can be determined as a communication normal state.

S102: When the communication state is normal and state information of the differential lock is abnormal, the VCU performs anomaly control processing on the differential lock.

In the embodiments of the present application, after determining the communication state between the MCU and the VCU, if the communication state between the MCU and the VCU is normal and the state information of the differential lock is abnormal, the VCU in the vehicle device performs anomaly control processing on the differential lock.

It should be noted that, in the embodiments of the present application, when controlling the differential lock, in addition to determining the communication state between the MCU and the VCU, state information of the differential lock also needs to be determined.

In the embodiments of the present application, when determining the state information of the differential lock, the MCU can first determine a differential lock control signal and an actual state sampling signal corresponding to the differential lock circuit, and then determine the state information of the differential lock according to the differential lock control signal and the actual state sampling signal.

It should be noted that, in the embodiments of the present application, the differential lock control signal is a digital signal input by the MCU to the differential lock circuit.

In the embodiments of the present application, when the vehicle device receives a differential lock instruction, the VCU can send a control instruction to the MCU based on the differential lock instruction. The MCU can set a differential lock control signal according to the control instruction and output the differential lock control signal to the differential lock circuit.

It should be noted that, in the embodiments of the present application, the actual state sampling signal is a signal of an actual working state of the differential lock in the differential lock circuit, and the actual state sampling signal can feed back a digital signal of the working state of the differential lock in the differential lock circuit.

Exemplarily, in some embodiments, Fig. 4 is a schematic diagram II of a differential lock circuit. As shown in Fig. 4, the differential lock circuit comprises a relay and a differential lock. Two sampling points are arranged in the circuit, wherein point ① is a differential lock control signal input point, and point ② is a differential lock actual signal sampling point. The differential lock control signal input point is a digital signal input to the differential lock circuit, and the differential lock actual signal sampling point is level feedback of a working state of the differential lock.

In the embodiments of the present application, the state information of the differential lock determined by the MCU according to the differential lock control signal and the actual state sampling signal can comprise three types: normal, abnormal unlocking, and abnormal locking.

In the embodiments of the present application, when both the differential lock control signal and the actual state sampling signal are at a high level, or both the differential lock control signal and the actual state sampling signal are at a low level, the MCU can determine the state information as normal; when the differential lock control signal is at a high level and the actual state sampling signal is at a low level, the MCU can determine the state information as abnormal unlocking; and when the differential lock control signal is at a low level and the actual state sampling signal is at a high level, the MCU can determine the state information as abnormal locking.

In the embodiments of the present application, when the differential lock control signal is at a high level, the differential lock control signal can be used to control the differential lock to be locked, and when the actual state sampling signal is at a high level, the actual state sampling signal indicates that the working state of the differential lock is locked. Therefore, if both the differential lock control signal and the actual state sampling signal are at a high level, the working state of the differential lock is considered normal, the differential lock is in a normal locked state, and the state information of the differential lock is determined as normal.

In the embodiments of the present application, when the differential lock control signal is at a low level, the differential lock control signal can be used to control the differential lock to be unlocked, and when the actual state sampling signal is at a low level, the actual state sampling signal indicates that the working state of the differential lock is unlocked. Therefore, if both the differential lock control signal and the actual state sampling signal are at a low level, the working state of the differential lock is considered normal, the differential lock is in a normal unlocked state, and the state information of the differential lock is determined as normal.

In the embodiments of the present application, when the differential lock control signal is at a high level, the differential lock control signal can be used to control the differential lock to be locked, and when the actual state sampling signal is at a low level, the actual state sampling signal indicates that the working state of the differential lock is unlocked. Therefore, if the differential lock control signal and the actual state sampling signal are different, the working state of the differential lock is considered abnormal, the differential lock is in an abnormal unlocking state, and the state information of the differential lock is determined as abnormal.

In the embodiments of the present application, when the differential lock control signal is at a low level, the differential lock control signal can be used to control the differential lock to be unlocked, and when the actual state sampling signal is at a high level, the actual state sampling signal indicates that the working state of the differential lock is locked. Therefore, if the differential lock control signal and the actual state sampling signal are different, the working state of the differential lock is considered abnormal, the differential lock is in an abnormal locking state, and the state information of the differential lock is determined as abnormal.

In the embodiments of the present application, after the MCU determines the state information of the differential lock according to the differential lock control signal and the actual state sampling signal, the MCU can send the state information to the VCU.

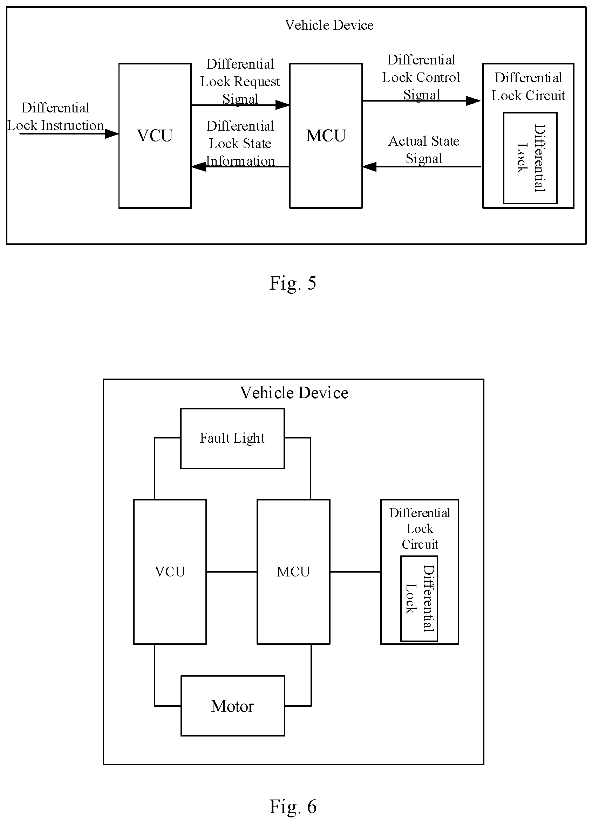

Exemplarily, in some embodiments, Fig. 5 is a schematic diagram of information interaction between the MCU and the VCU. As shown in Fig. 5, when the vehicle device receives a differential lock instruction, the VCU sends a differential lock request signal (control instruction) to the MCU based on the differential lock instruction. After receiving the differential lock request signal from the VCU, the MCU outputs a differential lock control signal and controls locking and unlocking of the differential lock through controlling the on/off state of the relay. Finally, the MCU determines the state information of the differential lock according to the differential lock control signal and the actual state sampling signal and transmits the state information of the differential lock to the VCU.

In the embodiments of the present application, if the communication state is determined as normal and the state information of the differential lock is abnormal, the VCU can perform anomaly control processing on the differential lock. Specifically, when the VCU performs anomaly control processing on the differential lock, if the state information indicates abnormal unlocking, the VCU can control a differential lock fault light to illuminate; and in a case where the state information indicates abnormal locking, the VCU can control the real-time speed of the vehicle according to a preset speed threshold and simultaneously control the differential lock fault light to illuminate.

It should be noted that, in the embodiments of the present application, the preset speed threshold can be any value greater than or equal to 0. For example, the preset speed threshold can be 20 km/h or 30 km/h, and the embodiments of the present application do not specifically limit this value.

Exemplarily, in some embodiments, Fig. 6 is a structural diagram II of a vehicle device in the embodiments of the present application. As shown in Fig. 6, the vehicle device comprises a differential lock fault light and a motor. The differential lock fault light in the vehicle device can be controlled by the MCU or the VCU, and can convey a warning signal through illuminating. The motor outputs torque to the vehicle during anomaly control processing to adjust the speed of the vehicle.

In a case where the state information indicates abnormal unlocking, the VCU can control the differential lock fault light to illuminate, thereby conveying a warning signal; and in a case where the state information indicates abnormal locking, which presents a safety risk, the VCU can control the real-time speed of the vehicle according to a preset speed threshold to decelerate the vehicle, while also controlling the differential lock fault light to illuminate, thereby conveying a warning signal.

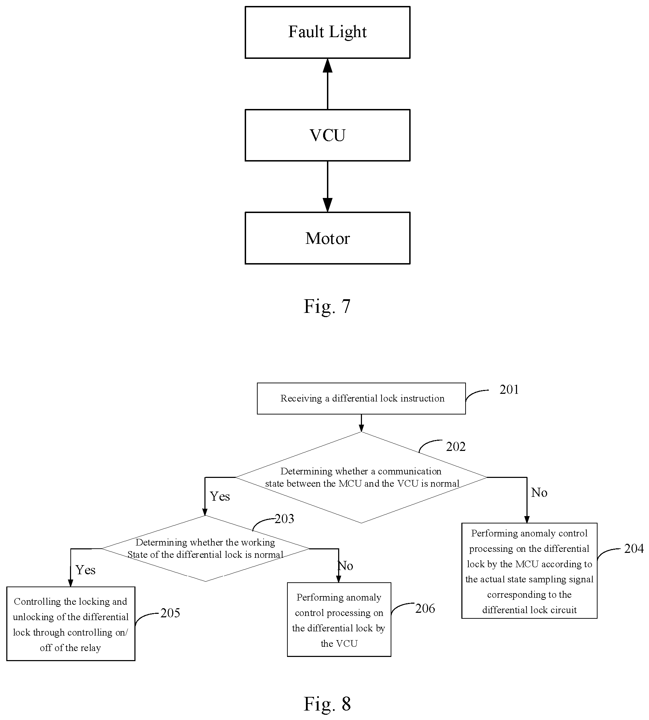

Exemplarily, in some embodiments, Fig. 7 is a schematic diagram of anomaly processing of a differential lock. As shown in Fig. 7, the VCU performs anomaly control processing on the differential lock, and in the case of abnormal unlocking, the VCU controls the differential lock fault light to illuminate. In a case where the state information indicates abnormal locking, the VCU controls the real-time speed of the vehicle according to a preset speed threshold, and simultaneously controls the differential lock fault light to illuminate. When the state information of the differential lock indicates abnormal unlocking, the MCU transmits the differential lock fault state to the VCU, and the VCU performs corresponding fault processing, illuminates the differential lock fault light, and conveys a warning signal. When the state information of the differential lock indicates abnormal locking, a safety risk exists, and it is necessary to control the actual speed of the vehicle. The actual speed of the vehicle should be lower than a preset threshold. The preset threshold can be any value greater than or equal to 0; for example, the preset threshold can be 20 km/h or 30 km/h. The embodiments of the present application do not specifically limit this value.

It can be seen that, in the embodiments of the present application, the vehicle device can first determine the communication state between the MCU and the VCU. When the communication state is normal and the state information of the differential lock is abnormal, the MCU transmits the differential lock fault state to the VCU, and the VCU performs anomaly control processing on the differential lock. Specifically, when the state information of the differential lock indicates abnormal unlocking, the VCU performs corresponding fault processing, illuminates the differential lock fault light, and conveys a warning signal. When the state information of the differential lock indicates abnormal locking, a safety risk exists; in this case, the VCU controls the real-time speed of the vehicle according to a preset speed threshold, so that even under abnormal conditions the vehicle can be safely controlled, thereby ensuring safe vehicle operation under abnormal conditions, protecting both occupants and the vehicle, while reducing adverse effects caused by control failure.

S103: When the communication state is abnormal, the MCU performs anomaly control processing on the differential lock according to the actual state sampling signal corresponding to the differential lock circuit.

In the embodiments of the present application, after determining the communication state between the MCU and the VCU, if the communication state is abnormal, the MCU in the vehicle device can perform anomaly control processing on the differential lock according to the actual state sampling signal corresponding to the differential lock circuit.

In the embodiment of the present application, when the MCU performs anomaly control processing on the differential lock based on the actual state sampling signal, if the actual state sampling signal is at a high level, the MCU sets the differential lock control signal to a low level and outputs the differential lock control signal to the differential lock circuit, controls the motor to perform zero torque output, and illuminates the differential lock fault light. If the actual state sampling signal is at a low level, the MCU controls the motor to perform zero torque output and illuminates the differential lock fault light.

It should be noted that, in the embodiments of the present application, if the actual state sampling signal corresponding to the differential lock circuit is at a high level, the differential lock can be considered to be in an abnormal locked state. At this time, the MCU sets the differential lock control signal to a low level. The differential lock control signal is a digital signal input by the MCU to the differential lock circuit. When the vehicle device receives a differential lock instruction, the VCU sends a control instruction to the MCU based on the differential lock instruction, and the MCU sets a differential lock control signal according to the control instruction and outputs the differential lock control signal to the differential lock circuit. At the same time, when the differential lock is abnormally locked, there exists a safety risk. The MCU needs to control the motor to perform zero torque output, adjust the vehicle speed to ensure vehicle safety, and simultaneously control the fault light to illuminate as a warning.

As can be seen, in the embodiments of the present application, the vehicle device can first determine the communication state between the MCU and the VCU. When the communication state is abnormal, the MCU in the vehicle device can perform anomaly control processing on the differential lock according to the actual state sampling signal corresponding to the differential lock circuit. When the actual state sampling signal is at a high level, the differential lock can be considered to be in an abnormal locked state. The MCU sets the differential lock control signal to a low level, and the differential lock control signal is a digital signal output from the MCU to the differential lock circuit. The MCU outputs the differential lock control signal to the differential lock circuit, controls the motor to perform zero torque output to decelerate the vehicle, and illuminates the differential lock fault light to transmit a warning. When the actual state sampling signal is at a low level, the differential lock is in an abnormal unlocked state. The MCU controls the motor to perform zero torque output, decelerates the vehicle, and illuminates the differential lock fault light to transmit a warning signal. This ensures that, when the communication between the MCU and the VCU is abnormal, the MCU can perform anomaly control processing on the differential lock according to the actual state sampling signal corresponding to the differential lock circuit.

In summary, the differential lock control method proposed in S101 to S103 is applied to a vehicle device, the vehicle device first determines the communication state between the MCU and the VCU; when the communication state is normal and the state information of the differential lock is abnormal, the VCU performs anomaly control processing on the differential lock; and when the communication state is abnormal, the MCU performs anomaly control processing on the differential lock according to the actual state sampling signal. It can be seen that, in the embodiments of the present application, anomaly control processing is respectively performed by the MCU or the VCU under different abnormal conditions, thereby overcoming the defect that the control manner of the differential lock is relatively single, adapting to various scenarios of differential lock abnormalities or communication abnormalities, enabling anomaly processing to be effectively performed on the differential lock, and improving safety of the vehicle device.

Based on the above embodiments, another embodiment of the present application provides a differential lock control method, and the differential lock control method is applied to a vehicle device. When the vehicle device receives a differential lock instruction, the VCU sends a differential lock request signal to the MCU. After receiving the request signal from the VCU, the MCU outputs a differential lock control signal and controls locking and unlocking of the differential lock through controlling the on/off state of the relay. Finally, the MCU transmits the working state of the differential lock to the VCU. First, the communication state between the MCU and VCU is determined. When the communication state is normal, the working state of the differential lock is further evaluated, and when the differential lock works abnormally, the VCU performs anomaly control processing on the differential lock. When the communication state is abnormal, the MCU performs anomaly control processing on the differential lock according to the actual state sampling signal corresponding to the differential lock circuit.

In the embodiments of the present application, Fig. 8 is a schematic flowchart II of implementation of a differential lock control method. As shown in Fig. 8, the differential lock control method in this embodiment can comprise the following steps:
S201: A differential lock instruction is received.

The vehicle device comprises an MCU, a VCU, and a differential lock circuit, the differential lock circuit comprises a differential lock. The VCU is a vehicle communication unit and is a core control component of the entire vehicle. The VCU collects signals from the accelerator pedal, brake pedal, and other components, makes corresponding determinations, and controls the actions of controllers of lower-level components, thereby driving the vehicle to run normally. The MCU is a motor control unit and is a chip composed of a microprocessor, a power supply circuit, and a control circuit, and is mainly used to control various types of motors. The differential lock circuit is composed of a differential lock and a relay, and locking and unlocking states of the differential lock can be controlled through controlling on/off of the relay. The differential lock refers to a mechanism that, when one drive wheel slips, locks the differential case and the axle shaft together, eliminating the differential action of the differential and transferring all torque to the other drive wheel on the other side.

S202. Whether communication between the MCU and the VCU is normal is determined.

In the embodiment of the present application, the vehicle device can determine the communication state between the MCU and the VCU. Through determining the communication state between the MCU and the VCU, it is possible to detect whether there is any abnormality in their communication. The communication state can be judged through intercepting signals between the MCU and the VCU. If there is an interruption, an error, or a failure in verification information in the signals between the MCU and the VCU, the communication between the MCU and the VCU is considered abnormal. If the signals between the MCU and the VCU can be fed back in time, the communication between the MCU and the VCU is considered normal. When the vehicle device receives a differential lock instruction, the VCU sends a differential lock request signal to the MCU. After receiving the request signal from the VCU, the MCU outputs a differential lock control signal and controls locking and unlocking of the differential lock through controlling the on/off state of the relay. Finally, the MCU transmits the working state of the differential lock to the VCU.

After determining whether the communication between the MCU and the VCU is normal, if the communication is normal, S203 is executed; otherwise, S204 is executed.

S203. Whether the working state of the differential lock is normal is determined.

In the embodiment of the present application, after confirming that the communication between the MCU and the VCU is normal, the MCU judges the working state of the differential lock.

In the embodiments of the present application, after the MCU determines the differential lock control signal and the actual state sampling signal corresponding to the differential lock circuit, it determines the state information of the differential lock according to the differential lock control signal and the actual state sampling signal. The differential lock control signal is a digital signal input by the MCU to the differential lock circuit. When the vehicle device receives a differential lock instruction, the VCU sends a control instruction to the MCU based on the differential lock instruction, and the MCU sets a differential lock control signal according to the control instruction and outputs the differential lock control signal to the differential lock circuit. The actual state sampling signal is a signal representing the actual working state of the differential lock in the differential lock circuit and can feed back the digital signal of the working state of the differential lock in the differential lock circuit.

After determining whether the working state of the differential lock is normal, if it is normal, S205 is executed; otherwise, S206 is executed.

S204. The MCU performs anomaly control processing on the differential lock according to the actual state sampling signal corresponding to the differential lock circuit.

In the embodiments of the present application, after determining the communication state between the MCU and the VCU, if the communication state is abnormal, the MCU in the vehicle device can perform anomaly control processing on the differential lock according to the actual state sampling signal corresponding to the differential lock circuit.

In the embodiment of the present application, when the MCU performs anomaly control processing on the differential lock based on the actual state sampling signal, if the actual state sampling signal is at a high level, the MCU sets the differential lock control signal to a low level and outputs the differential lock control signal to the differential lock circuit, controls the motor to perform zero torque output, and illuminates the differential lock fault light. If the actual state sampling signal is at a low level, the MCU controls the motor to perform zero torque output and illuminates the differential lock fault light.

Exemplarily, in the embodiments of the present application, if the actual state sampling signal corresponding to the differential lock circuit is at a high level, the differential lock can be considered to be in an abnormal locked state. At this time, the MCU sets the differential lock control signal to a low level. The differential lock control signal is a digital signal input by the MCU to the differential lock circuit. When the vehicle device receives a differential lock instruction, the VCU sends a control instruction to the MCU based on the differential lock instruction, and the MCU sets a differential lock control signal according to the control instruction and outputs the differential lock control signal to the differential lock circuit. At the same time, when the differential lock is abnormally locked, there exists a safety risk. The MCU needs to control the motor to perform zero torque output, adjust the vehicle speed to ensure vehicle safety, and simultaneously control the fault light to illuminate as a warning.

S205. The locking and unlocking of the differential lock is controlled.

In the embodiment of the present application, after determining that the communication between the MCU and the VCU is normal and that the differential lock is working normally, the received differential lock instruction is processed accordingly. The VCU sends a differential lock request signal to the MCU. After receiving the request signal from the VCU, the MCU outputs a differential lock control signal and controls locking and unlocking of the differential lock through controlling the on/off state of the relay. Finally, the MCU transmits the working state of the differential lock to the VCU.

S206. The VCU performs anomaly control processing on the differential lock.

In the embodiment of the present application, after the MCU determines the state information of the differential lock according to the differential lock control signal and the actual state sampling signal, the state information is transmitted to the VCU. If the state information of the differential lock indicates an abnormal condition, the VCU can perform anomaly control processing on the differential lock.

Exemplarily, in the embodiment of the present application, when the VCU performs anomaly control processing on the differential lock, if the state information indicates abnormal unlocking, the VCU controls the differential lock fault light to illuminate. In a case where the state information indicates abnormal locking, the VCU controls the real-time speed of the vehicle according to a preset speed threshold, and simultaneously controls the differential lock fault light to illuminate. The differential lock fault light in the vehicle device can be controlled by either the MCU or the VCU. The motor outputs torque to the vehicle during anomaly control processing to adjust the speed of the vehicle. When the state information of the differential lock indicates abnormal unlocking, the MCU transmits the differential lock fault state to the VCU, and the VCU performs corresponding fault processing, illuminates the differential lock fault light, and conveys a warning signal. When the state information of the differential lock indicates abnormal locking, a safety risk exists, and it is necessary to control the actual speed of the vehicle. The actual speed of the vehicle should be lower than a preset threshold. The preset threshold can be any value greater than or equal to 0; for example, the preset threshold can be 20 km/h or 30 km/h. The embodiments of the present application do not specifically limit this value.

It should be noted that, in the embodiments of the present application, the specific execution processes in S201 to S206 are provided merely as an example of the differential lock control method. The execution sequence of S201 to S206 is not specifically limited, and the specific execution processes of S201 to S206 can be combined in any manner.

An embodiment of the present application provides a differential lock control method which can be applied to a vehicle device. The vehicle device comprises an MCU, a VCU, and a differential lock circuit, and the differential lock circuit comprises a differential lock. The vehicle device determines the communication state between the MCU and the VCU. When the communication state is normal and the state information of the differential lock is abnormal, the VCU performs anomaly control processing on the differential lock. In the case where the state information of the differential lock indicates abnormal unlocking, the MCU transmits the differential lock fault state to the VCU, and the VCU performs corresponding fault processing, illuminates the differential lock fault light and conveys a warning. When the state information of the differential lock indicates abnormal locking, a safety risk exists; in this case, the VCU controls the real-time speed of the vehicle according to a preset speed threshold, ensuring that the vehicle can be safely controlled under abnormal conditions. When the communication state is abnormal, the MCU in the vehicle device can perform anomaly control processing on the differential lock according to the actual state sampling signal corresponding to the differential lock circuit. When the actual state sampling signal is at a high level, the differential lock can be considered to be in an abnormal locked state. The MCU sets the differential lock control signal to a low level, and the differential lock control signal is a digital signal output from the MCU to the differential lock circuit. The MCU outputs the differential lock control signal to the differential lock circuit, controls the motor to perform zero torque output to decelerate the vehicle, and illuminates the differential lock fault light to transmit a warning. When the actual state sampling signal is at a low level, the differential lock is in an abnormal unlocked state. The MCU controls the motor to perform zero torque output, decelerates the vehicle, and illuminates the differential lock fault light to transmit a warning signal. This ensures that, when the communication between the MCU and the VCU is abnormal, the MCU can perform anomaly control processing on the differential lock according to the actual state sampling signal corresponding to the differential lock circuit.

Based on the above embodiments, another embodiment of the present application provides a differential lock control method which can be applied to a vehicle device. When the vehicle device receives a differential lock instruction, the VCU sends a differential lock function request signal to the MCU. Upon receiving the request signal from the VCU, the MCU outputs a differential lock control signal to control the locking and unlocking of the differential lock through controlling the on/off state of the relay. The actual state sampling signal of the differential lock is sent back to the MCU, which then transmits the working state of the differential lock to the VCU. If the differential lock is in an abnormal working state, the VCU handles the abnormal state, and if communication between the VCU and the MCU is abnormal, the MCU effectively handles the abnormal state.

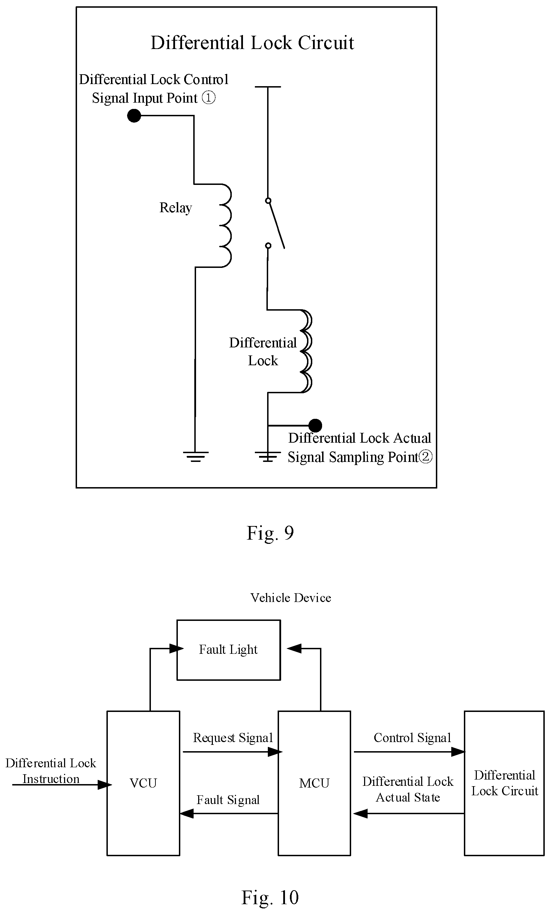

It should be noted that, in the embodiment of the present application, Fig. 9 is a schematic diagram of a safety control circuit of a differential lock. As shown in Fig. 9, the differential lock circuit is composed of a differential lock and a relay. Point ① is the differential lock control signal input point, and point ② is the differential lock actual signal sampling point. The differential lock circuit can control the locking and unlocking of the differential lock through controlling the on/off state of the relay. When the relay is energized and engages, the differential lock works in a locked state; and when the relay is de-energized and disengages, the differential lock works in an unlocked state. The differential lock refers to a mechanism that, when one drive wheel slips, locks the differential case and the axle shaft together, eliminating the differential action of the differential and transferring all torque to the other drive wheel on the other side.

In the embodiment of the present application, Fig. 10 is a signal transmission diagram of differential lock control and anomaly processing. As shown in Fig. 10, when the VCU receives a differential lock instruction, the VCU sends a request signal (control instruction) to the MCU based on the differential lock instruction. After receiving the request signal from the VCU, the MCU outputs a control signal (differential lock control signal) and controls the locking and unlocking of the differential lock through controlling the on/off state of the relay. Finally, the MCU determines the state information of the differential lock according to the differential lock control signal and the actual state sampling signal, and transmits the fault information of the differential lock to the VCU.

If the communication state is normal and the state information of the differential lock is abnormal, the VCU performs anomaly control processing on the differential lock; and if the communication state is abnormal, the MCU performs anomaly control processing on the differential lock according to the actual state sampling signal corresponding to the differential lock circuit.

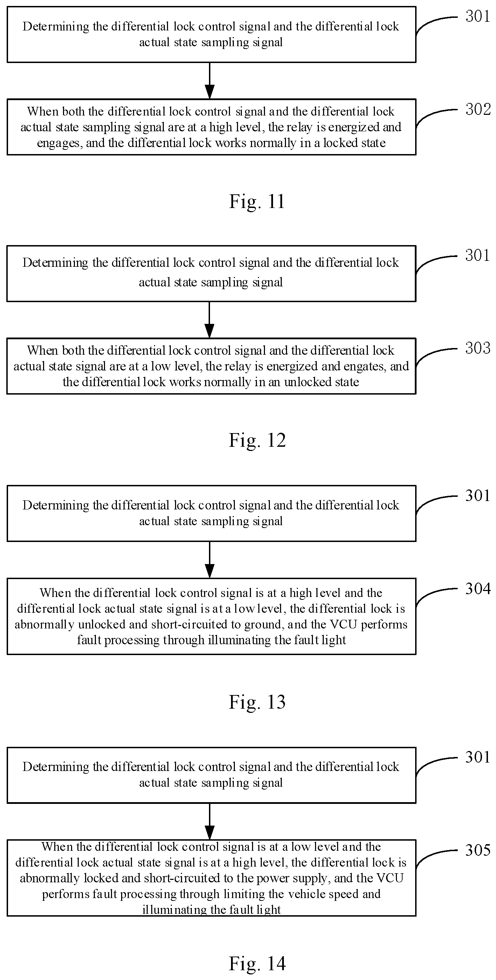

Exemplarily, in one embodiment of the present application, Fig. 11 is a flowchart of a differential lock in a normal locked state. As shown in Fig. 11, the differential lock control signal and the actual state sampling signal of the differential lock are determined (S301). When the differential lock control signal input is at a high level, indicating that the digital signal of the differential lock control signal is 1, the relay is energized and engages, and the differential lock begins to work. At this time, the actual state sampling point of the differential lock is at a high level, that is, when both the differential lock control signal and the actual state sampling signal of the differential lock are at a high level, the differential lock works normally and is in a locked state (S302).

Exemplarily, in one embodiment of the present application, Fig. 12 is a flowchart of a differential lock in a normal unlocked state. As shown in Fig. 12, the differential lock control signal and the actual state sampling signal of the differential lock are determined (S301). When the differential lock control signal input is at a low level, indicating that the digital signal of the differential lock control signal is 0, the relay is de-energized and the differential lock stops working. At this time, the actual state sampling point of the differential lock is at a low level, that is, when both the differential lock control signal and the actual state sampling signal of the differential lock are at a low level, the differential lock works normally and is in an unlocked state (S303).

Exemplarily, in one embodiment of the present application, Fig. 13 is a flowchart of a differential lock in an abnormal unlocked state. As shown in Fig. 13, the differential lock control signal and the actual state sampling signal of the differential lock are determined (S301). When the differential lock control signal input is at a high level, indicating that the digital signal of the differential lock control signal is 1, the relay is energized and engages, and the differential lock begins to work. At this time, the actual state sampling point of the differential lock is at a low level, indicating an abnormal unlocked state with a ground short. The VCU performs fault processing and illuminates the fault light, so that the differential lock is in an abnormal unlocked state (S304).

Exemplarily, in one embodiment of the present application, Fig. 14 is a flowchart II of a differential lock in an abnormal locked state. As shown in Fig. 14, the differential lock control signal and the actual state sampling signal of the differential lock are determined (S301). When the differential lock control signal input is at a low level, indicating that the digital signal of the differential lock control signal is 0, the relay is de-energized and the differential lock stops working. At this time, the actual state sampling point of the differential lock is at a high level, indicating an abnormal locked state with a power short. The VCU performs fault processing, limits the vehicle speed, and illuminates the fault light, so that the differential lock is in an abnormal locked state (S305).

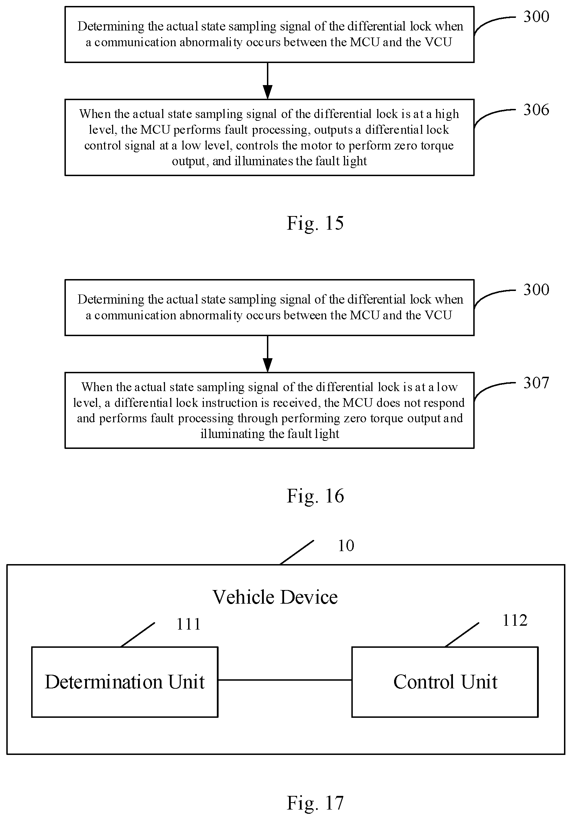

Exemplarily, in one embodiment of the present application, Fig. 15 is a flowchart I of a differential lock in a communication anomaly processing state. As shown in Fig. 15, when a communication abnormality occurs between the MCU and the VCU, the actual state sampling signal of the differential lock is determined (S300). At this time, if the input of the differential lock control signal is at a high level, the MCU performs fault processing, sends the differential lock control signal at low level, control the motor to perform zero torque output, and illuminates the fault light (S306).

Exemplarily, in one embodiment of the present application, Fig. 16 is a flowchart II of a differential lock in a communication anomaly processing state. As shown in Fig. 16, when a communication abnormality occurs between the MCU and the VCU, the actual state sampling signal of the differential lock is determined (S300). At this time, if the input of the differential lock control signal is at a low level and a differential lock instruction is received, the MCU does not respond. The MCU performs fault processing, controls the motor to perform zero torque output and illuminates the fault light (S307).

An embodiment of the present application provides a differential lock control method which can be applied to a vehicle device. The vehicle device comprises an MCU, a VCU, and a differential lock circuit, and the differential lock circuit comprises a differential lock. The vehicle device determines the communication state between the MCU and the VCU. When the communication state is normal and the state information of the differential lock is abnormal, the VCU performs anomaly control processing on the differential lock. In the case where the state information of the differential lock indicates abnormal unlocking, the MCU transmits the differential lock fault state to the VCU, and the VCU performs corresponding fault processing, illuminates the differential lock fault light and conveys a warning. When the state information of the differential lock indicates abnormal locking, a safety risk exists; in this case, the VCU controls the real-time speed of the vehicle according to a preset speed threshold, ensuring that the vehicle can be safely controlled under abnormal conditions. When the communication state is abnormal, the MCU in the vehicle device can perform anomaly control processing on the differential lock according to the actual state sampling signal corresponding to the differential lock circuit. When the actual state sampling signal is at a high level, the differential lock can be considered to be in an abnormal locked state. The MCU sets the differential lock control signal to a low level, and the differential lock control signal is a digital signal input by the MCU to the differential lock circuit. The MCU outputs the differential lock control signal to the differential lock circuit, controls the motor to perform zero torque output to decelerate the vehicle, and illuminates the differential lock fault light to transmit a warning. When the actual state sampling signal is at a low level, the differential lock is in an abnormal unlocked state. The MCU controls the motor to perform zero torque output, decelerates the vehicle, and illuminates the differential lock fault light to transmit a warning signal. This ensures that, when the communication between the MCU and the VCU is abnormal, the MCU can perform anomaly control processing on the differential lock according to the actual state sampling signal corresponding to the differential lock circuit.

Based on the above embodiments, in another embodiment of the present application, Fig. 17 is a structural diagram III of a vehicle device in the embodiment of the present application. As shown in Fig. 17, the vehicle device 10 in the embodiment of the present application can comprise a determining unit 111 and a control unit 112.

The determination unit 111 is configured to determine a communication state between the MCU and the VCU.

The control unit 112 is configured to perform anomaly control processing on the differential lock when the communication state is normal and state information of the differential lock is abnormal; and when the communication state is abnormal, the MCU performs anomaly control processing on the differential lock according to an actual state sampling signal.

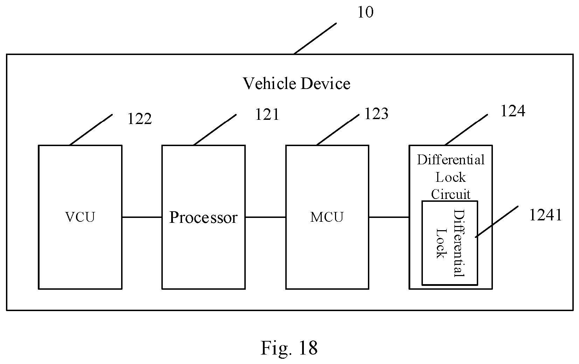

In the embodiment of the present application, further, Fig. 18 is a structural diagram IV of a vehicle device in the embodiment of the present application. As shown in Fig. 18, the vehicle device 10 in the embodiment of the present application can further comprise a processor 121, a VCU 122, an MCU 123, and a differential lock circuit 124, and the differential lock circuit 124 comprises a differential lock 1241.

In the embodiment of the present application, the processor 121 can be at least one of an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, or a microprocessor. It is understandable that, for different devices, the electronic components used to implement the functions of the processor may vary, and the present embodiment does not impose any specific limitation.

In the embodiment of the present application, the processor 121 is configured to determine the communication state between the MCU and the VCU;
the VCU 122 is configured to perform anomaly control processing on the differential lock when the communication state is normal and state information of the differential lock is abnormal; and
the MCU 123 is configured to perform anomaly control processing on the differential lock according to an actual state sampling signal corresponding to the differential lock circuit when the communication state is abnormal.

In addition, in the present embodiment, each functional module can be integrated into a single processing unit, or each unit can physically exist separately, or two or more units can be integrated into one unit. The integrated units can be implemented in hardware form or in the form of software functional modules.

If the integrated unit is implemented in the form of software functional modules rather than being sold or used as an independent product, the integrated unit can be stored in a computer-readable storage medium. Based on such understanding, the technical solution according to this embodiment, essentially, or the part making a contribution over the prior art, or all or part of the technical solution, can be embodied in the form of a software product. The computer software product is stored in a storage medium and comprises a plurality of instructions configured to cause a computer device, such as a personal computer, a server, or a network device, or a processor to perform all or part of the steps of the method according to this embodiment. The storage media described above comprise, for example, a USB flash drive, a removable hard disk, a read only memory (ROM), a random access memory (RAM), a magnetic disk, an optical disc, and other media capable of storing program code.

The embodiment of the present application provides a computer-readable storage medium on which a program is stored, and when the program is executed by a processor, it implements the differential lock control method as described above.

The program instructions corresponding to the differential lock control method in this embodiment can be stored on storage media such as an optical disk, a hard disk, or a USB flash drive. When the program instructions corresponding to the differential lock control method stored on the storage media are read or executed by an electronic device, the following steps are performed:
determining a communication state between the MCU and the VCU;
performing anomaly control processing on the differential lock by the VCU when the communication state is normal and state information of the differential lock is abnormal; and
performing anomaly control processing on the differential lock according to an actual state sampling signal corresponding to the differential lock circuit by the MCU when the communication state is abnormal.

Those skilled in the art should understand that the embodiments of the present application may be provided as methods, systems, or computer program products. Therefore, the present application can be implemented in the form of a hardware embodiment, a software embodiment, or an embodiment combining both software and hardware. Furthermore, the present application can be implemented in the form of a computer program product embodied on one or more computer-usable storage media (comprising but not limited to, magnetic storage media and optical storage media) comprising computer-usable program code.

The present application is described with reference to flowcharts and/or block diagrams of methods, devices (systems), and computer program products in embodiments of the present invention. It should be understood that each flow and/or block in a flow diagram and/or block diagram, as well as the combination of the flow and/or block in the flow diagram and/or block diagram, can be implemented by computer program instructions. These computer program instructions can be provided to a general-purpose computer, a special-purpose computer, an embedded processor, or other programmable data processing equipment so as to generate a machine, so that the instructions executed by the computer or other programmable data processing equipment are caused to generate a device for implementing the functions specified in one or more processes in the flowchart and/or one or more blocks in the block diagram.

These computer program instructions can also be stored in a computer readable memory capable of directing a computer or other programmable data processing devices to work in a particular manner, so that the instructions stored in the computer readable memory produce an article of manufacture comprising an instruction device. The instruction device implements the functions specified in one or more flows in the flow diagram and/or one or more blocks in the block diagram.

These computer program instructions can also be loaded onto a computer or other programmable data processing device, so that a series of steps are executed on the computer or other programmable equipment to produce computer-implemented processing, thus, the instructions executed on the computer or other programmable devices provide steps for implementing the functions specified in one or more flows in the flow diagram and/or one or more blocks in the block diagram.

The above descriptions are merely optional embodiments of the present application and are not intended to limit the protection scope of the present application.

## Claims

1. A differential lock control method, wherein the control method is applied to a vehicle device, and the vehicle device comprises a motor control unit (MCU), a vehicular communication unit (VCU), and a differential lock circuit, the differential lock circuit comprises a differential lock, and the method comprises:
determining a communication state between the MCU and the VCU;
performing anomaly control processing on the differential lock by the VCU when the communication state is normal and state information of the differential lock is abnormal; and
performing anomaly control processing on the differential lock according to an actual state sampling signal corresponding to the differential lock circuit by the MCU when the communication state is abnormal.

2. The method according to claim 1, wherein the method further comprises:
the MCU determines a differential lock control signal and the actual state sampling signal corresponding to the differential lock circuit; and
the MCU determines the state information of the differential lock according to the differential lock control signal and the actual state sampling signal.

3. The method according to claim 2, wherein the method further comprises:
the MCU sends the state information to the VCU.

4. The method according to claim 2, wherein the state information being abnormal comprises abnormal unlocking and abnormal locking, and the MCU determines the state information of the differential lock according to the differential lock control signal and the actual state sampling signal, comprising:
when both the differential lock control signal and the actual state sampling signal are at a high level, or both the differential lock control signal and the actual state sampling signal are at a low level, the MCU determines the state information as normal;
when the differential lock control signal is at a high level and the actual state sampling signal is at a low level, the MCU determines the state information as abnormal unlocking; and
when the differential lock control signal is at a low level and the actual state sampling signal is at a high level, the MCU determines the state information as abnormal locking.

5. The method according to claim 1, wherein the vehicle device comprises a differential lock fault light and a motor.

6. The method according to claim 5, wherein the VCU performs anomaly control processing on the differential lock, comprising:
when the state information is abnormal unlocking, the VCU controls the differential lock fault light to illuminate; and
when the state information is abnormal locking, the VCU controls a real-time speed of a vehicle according to a preset speed threshold, and simultaneously controls the differential lock fault light to illuminate.

7. The method according to claim 5, wherein the MCU performs anomaly control processing on the differential lock according to the actual state sampling signal, comprising:
when the actual state sampling signal is at a high level, the MCU sets a differential lock control signal to a low level and outputs the differential lock control signal to the differential lock circuit, controls the motor to perform zero torque output, and controls the differential lock fault light to illuminate; and
when the actual state sampling signal is at a low level, the MCU controls the motor to perform zero torque output, and controls the differential lock fault light to illuminate.

8. The method according to any one of claims 2, 3, 4, and 7, wherein the method further comprises:
a differential lock instruction is received;
the VCU sends a control instruction to the MCU on the basis of the differential lock instruction; and
the MCU sets the differential lock control signal according to the control instruction and outputs the differential lock control signal to the differential lock circuit.

9. The method according to claim 8, wherein the differential lock circuit comprises a relay, and the method further comprises:
when the differential lock control signal is at a high level, the relay controls the differential lock to work in a locked state; and
when the differential lock control signal is at a low level, the relay controls the differential lock to work in an unlocked state.

10. A vehicle device, wherein the vehicle device comprises: a determination unit and a control unit;
the determination unit is configured to determine a communication state between a motor control unit (MCU) and a vehicular communication unit (VCU); and
the control unit is configured to perform anomaly control processing on a differential lock when the communication state is normal and state information of the differential lock is abnormal; and perform anomaly control processing on the differential lock according to an actual state sampling signal corresponding to a differential lock circuit when the communication state is abnormal.

11. A vehicle device, wherein the vehicle device comprises a processor, a motor control unit (MCU), a vehicular communication unit (VCU), and a differential lock circuit, and the differential lock circuit comprises a differential lock;
the processor is configured to determine a communication state between the MCU and the VCU;
the VCU is configured to perform anomaly control processing on the differential lock when the communication state is normal and state information of the differential lock is abnormal; and
the MCU is configured to perform anomaly control processing on the differential lock according to an actual state sampling signal corresponding to the differential lock circuit when the communication state is abnormal.

12. A computer-readable storage medium, with a program stored thereon, wherein when the program is executed by a processor, the method according to any one of claims 1 to 9 is implemented.
